# EUROPÄISCHE PATENTSCHRIFT

(11) **EP 3 938 714 B1**
(45) Veröffentlichungstag und Bekanntmachung des Hinweises auf die Patenterteilung: **22.01.2025**
(21) Anmeldenummer: 20716691.9
(22) Anmeldetag: 06.03.2020
(51) Int. Cl.: F24D 10/00, F24D 19/10, F24H 15/212, F24H 15/219, F24H 15/32, F24H 15/315

(54) **VERFAHREN ZUM BETREIBEN EINER WOHNUNGSSTATION UND WOHNUNGSSTATION DAZU**
METHOD FOR OPERATING A HOME STATION, AND HOME STATION FOR SAME
PROCÉDÉ POUR FAIRE FONCTIONNER UNE STATION D'APPARTEMENT ET STATION D'APPARTEMENT CORRESPONDANTE

(30) Priorität: 10.03.2019 DE 102019106056
(43) Veröffentlichungstag der Anmeldung: 19.01.2022
(73) Patentinhaber: Gampper GmbH, 67821 Alsenz (DE)
(72) Erfinder: GAMPPER, Julian, 55545 Bad Kreuznach (DE)
(74) Vertreter: Müller, Jochen
(86) Internationale Anmeldenummer: PCT/DE2020/100158
(87) Internationale Veröffentlichungsnummer: WO 2020/182253

(56) Entgegenhaltungen:
- EP-A1- 0 060 011
- EP-A2- 0 222 040
- EP-A2- 2 157 376
- DE-A1- 10 012 069
- DE-A1- 102008 033 063

## Beschreibung

Die Erfindung bezieht sich auf ein Verfahren zum Betreiben einer Wohnungsstation mit Anschlüssen für Warmwasser, einen Heizungskreislauf und einen Heizwasserkreislauf, der mit einer zentralen Wärmeerzeugungseinrichtung gekoppelt ist, wobei das Heizwasser zur Erzeugung von Warmwasser einen Wärmetauscher durchströmt und eine Warmwasser-Vorrangschaltung bei einer Entnahme von Warmwasser mittels einer Ventileinheit einen Heizungskreislauf abschaltet, und eine Wohnungsstation dazu.

In Mehrfamilienhäusern gibt es im Wesentlichen zwei verschiedene Möglichkeiten die einzelnen Wohnungen mit Heizwärme- und Warmwasser zu versorgen. Bei konventionellen Systemen werden die Wohnungen durch getrennte Heizungs- und Warmwasserleitungen von einem zentralen Kessel und einem Trinkwassererwärmer (Speicher) direkt versorgt. Bei dem Einsatz einer Wohnungsstation gibt es eine zentrale Wärmeerzeugung sowie eine Verteilungsleitung für die Heizungswärme und eine für Kaltwasser. Das Warmwasser wird in den Wohnungen in den Wohnungsstationen, die einen Plattenwärmetauscher umfassen, dezentral bereitet.

Eine aus der Praxis bekannte Wohnungsstation dient der Versorgung einer Wohneinheit insbesondere in einem Mehrfamilienhaus mit Warmwasser und Heizungswasser. An der Wohnungsstation sind zum Anschluss an ein Hausversorgungsnetz ein Eingang für Kaltwasser, ein Heizwasser-Zulauf und ein Heizwasser-Rücklauf vorgesehen. Die Erwärmung des Trinkwassers erfolgt im Durchflussprinzip über einen Wärmetauscher insbesondere einen Edelstahlplattenwärmetauscher und einen druckgesteuerten Proportionalmengenregler, um eine Vorrangschaltung für das Warmwasser bereitzustellen.

Bei einer Anforderung von Warmwasser durch das Öffnen einer Zapfstelle entsteht ein Druckabfall am Proportionalmengenregler und der druckgesteuerte Proportionalmengenregler wechselt in die Warmwasser-Vorrangschaltung. Das Heizwasser durchströmt den Wärmetauscher und den Proportionalmengenregler derart, dass das Kaltwasser erwärmt wird und als Warmwasser zur Verfügung steht. Die gesamte Wärmeenergie steht der Warmwasserbereitung zur Verfügung. Nach Beendigung der Zapfung, also der Entnahme von Trinkwarmwasser, schließt der Proportionalmengenregler und verhindert ein weiteres Beheizen des Wärmetauschers. In einem Heizungsbetrieb strömt über den Heizwasser-Vorlauf des Heizwassers Heizungswasser in den Heizkreis-Vorlauf der Wohnung und der Proportionalmengenregler gibt den Weg des Heizkreis-Rücklaufs zu dem Rücklauf des Heizwassers frei.

Als problematisch erweist sich der druckgesteuerte Proportionalmengenregler, der aufgrund seiner Bauart zum Verkalken sowie zu Leckage und damit zu Störungen neigt.

Die EP 0 060 011 A1 offenbart eine Heizungs-Steuereinheit für eine Zentralheizung und für die Bereitstellung von Warmwasser in einer Wohnung.

Der Erfindung liegt die Aufgabe zugrunde, ein Verfahren zum Betreiben einer Wohnungsstation und eine Wohnungsstation mit einer Warmwasser-Vorrangschaltung der eingangs genannten Art zu schaffen, das bzw. die unter Beibehaltung der genannten Vorteile die Verwendung des nachteiligen Proportionalmengenreglers vermeidet.

Erfindungsgemäß wird die Aufgabe bei dem Verfahren dadurch gelöst, dass an dem Wärmetauscher eine Rücklauf-Temperatur erfasst und bei Erreichen einer vorgegebenen Rücklauf-Temperatur an der Ventileinheit ein Heizungs-Rücklauf des Heizungskreislaufs geschlossen wird.

Bei einer Wohnungsstation wird die Aufgabe dadurch gelöst, dass dem Wärmetauscher ein Temperaturfühler zugeordnet ist, der mit der Ventileinheit derart gekoppelt ist, dass bei einer von dem Temperaturfühler erfassten vorgegebenen Temperatur in einem Heizungs-Rücklauf die Ventileinheit einen Heizungs-Rücklauf des Heizungskreislaufs schließt.

Es wurde festgestellt, dass ein Temperaturabfall an dem Wärmetauscher, der an einem Rücklauf des Wärmetauschers festgestellt wird, und zum Erreichen einer vorgegebenen Temperatur, die im Rahmen der vorliegenden Erfindung auch als eine Grenztemperatur bezeichnet wird, führt, auf die Entnahme von Warmwasser schließen lässt. Bei der Entnahme einer größeren Menge Warmwasser ist die bekannte Warmwasser-Vorrangschaltung vorteilhaft, die dafür sorgt, dass sämtliches Heizwasser von dem Heizwassererzeuger zur Temperierung des Warmwassers durch den Wärmetauscher geleitet wird und während dieser Zeit der Heizungskreislauf, an den beispielsweise eine Fußbodenheizung, mindestens ein Heizkörper oder dergleichen angeschlossen ist, abgesperrt wird, so dass kein Heizwasser den Heizungskreislauf durchströmt. Selbstverständlich ist es möglich, dass der Durchfluss des Rücklaufs in Abhängigkeit von der erfassten Temperatur verändert wird, so dass mit einer kleineren Temperaturänderung im Rücklauf entweder keine oder eine geringe Änderung des Strömungsquerschnitts einhergeht, um sonach auch eine entsprechende Änderung der für die Warmwasserbereitung zur Verfügung stehende Wärmeenergie, die durch das Heizwasser an dem Wärmetauscher bereitgestellt bzw. transportiert wird, zu erzielen.

Entgegen der bekannten Verfahrensweise, bei der ein Druckabfall an einem Proportionalmengenregler festgestellt und an diesem Proportionalmengenregler die Warmwasser-Vorrangschaltung realisiert wird, ist die Anordnung des temperaturgeregelten Ventilblocks weniger störungsanfällig. Darüber hinaus stellt die Anordnung der Ventileinheit mit dem zugeordneten Temperaturfühler eine einfach zu installierende Technik dar, die nicht zur Verkalkung sowie zur Undichtigkeit neigt und darüber hinaus im Wesentlichen wartungsfrei ist.

Erfindungsgemäß ist der mit der Ventileinheit für die Warmwasser-Vorrangschaltung gekoppelte Temperaturfühler dem Heizungs-Rücklauf des Heizungskreislaufs zugeordnet. Demnach wird die Temperatur im Heizungs-Rücklauf als Grenztemperatur erfasst und führt beim Erreichen zum Schließen des Heizungs-Rücklaufs des Heizungskreislaufs. Wird die Grenztemperatur wieder überschritten, dann wird auch der Heizungs-Rücklauf wieder geöffnet und es findet ein regulärer Heizbetrieb statt, auf den die Entnahme einer relativ geringen Menge Warmwassers keinen Einfluss hat. Die Grenztemperatur wird an einem Thermostatventil der Ventileinheit eingestellt.

Die Unteransprüche stellen vorteilhafte Ausgestaltungen der Erfindung dar.

Vorzugsweise wird die Zapftemperatur des Warmwassers als Temperatur in dem Wärmetauscher zur Regelung der Ventileinheit erfasst. Demnach kann der dem Wärmetauscher zugeordnete Temperaturfühler zur Erfassung der Zapftemperatur eine bestimmte Zapftemperatur bzw. Entnahmetemperatur des Warmwassers sicherstellen, wobei selbstverständlich eine entsprechende Heizwassertemperatur an dem Wärmetauscher anliegen muss, die eine Erwärmung des Trinkwassers, das auch als Frischwasser zu bezeichnen ist, in dem Wärmetauscher auf die Mindesttemperatur ermöglicht.

Selbstverständlich können die verbauten Temperaturfühler entweder über einen Leiter oder eine Drahtlosschnittstelle mit der Ventileinheit gekoppelt sein.

In Ausgestaltung umfasst die Ventileinheit ein erstes Thermostatventil, an dem eine Temperatur des Warmwasserkreislaufs einstellbar ist, und ein zweites Thermostatventil, an dem eine Grenztemperatur für die Warmwasser-Vorrangschaltung einstellbar ist. Bevorzugt sind beide Thermostatventile in einem gemeinsamen Ventilblock der Ventileinheit ausgebildet.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:

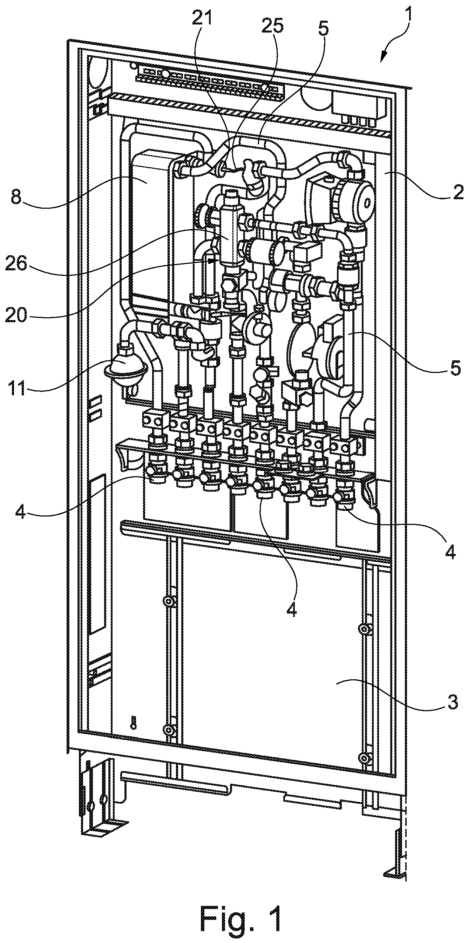

- Fig. 1: eine Darstellung einer Wohnungsstation nach der Erfindung,

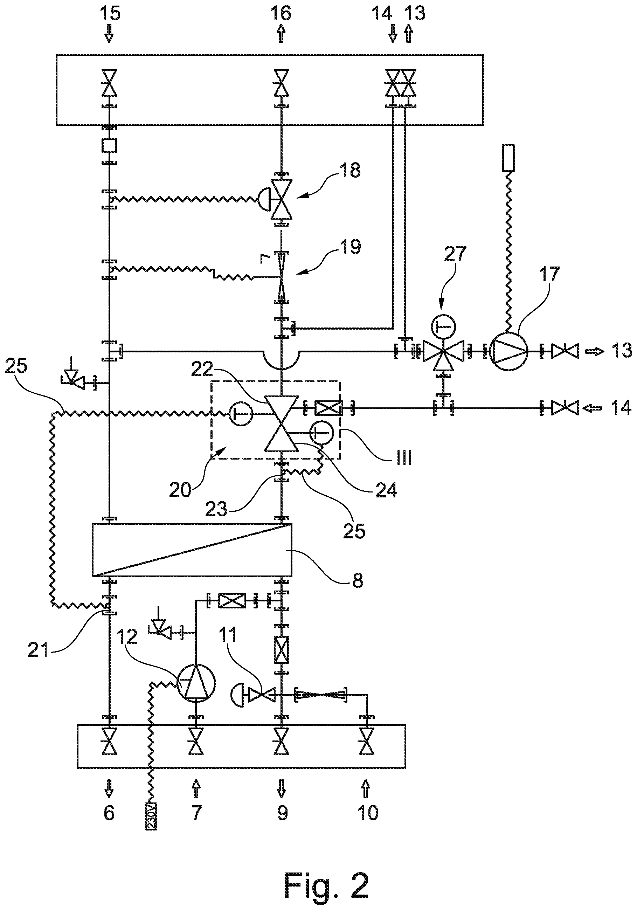

- Fig. 2: eine schematische Darstellung der Wohnungsstation nach Fig. 1 und

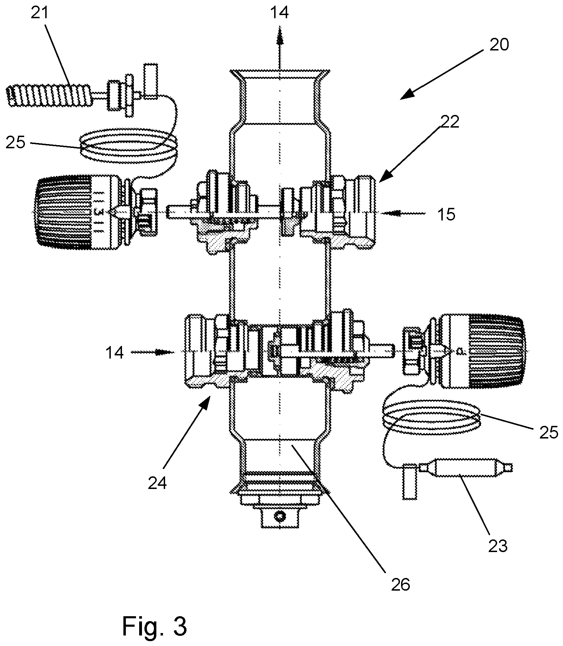

- Fig. 3: eine vergrößerte Darstellung der Einzelheit III nach Fig. 2.

Die Wohnungsstation 1 umfasst einen Montagerahmen 2 mit einer Montageplatte 3 zur Befestigung sämtlicher Bauteile, die für eine Versorgung einer Wohnung, insbesondere in einem Mehrfamilienhaus, mit Wasser und Heizungswasser sowie der Verteilung erforderlich sind. Für eine Absperrung sind endseitig Absperrventile 4 an Rohrleitungen 5 vorgesehen. Im Einzelnen sind ein Warmwasser-Vorlauf 6 und ein Warmwasser-Rücklauf 7 an einem Wärmetauscher 8 angeschlossen, um warmes Trinkwasser für die Wohnung bereit zu stellen, das beispielsweise an Armaturen von Waschbecken, Spülbecken, Duschen und Badewannen entnehmbar ist und mittels einer Umwälzpumpe 12 im Warmwasser-Kreislauf gepumpt wird. Zur Bereitstellung von Trinkwasser ist ein Kaltwasser-Zulauf 9 mit dem Wärmetauscher 8 gekoppelt, wobei in die entsprechende Rohrleitung 5, die mit einem zu den Armaturen führenden Kaltwasser-Auslauf 10 verbunden ist, ein Wasserschlagdämpfer 11 eingesetzt ist, um in der Rohrleitung 9 auftretende Druckspitzen auf ein bestimmtes Niveau zu dämpfen. Im Weiteren sind zwei Heizungskreisläufe zum Anschluss einer Fußbodenheizung und zum Anschluss von Radiatoren vorgesehen, die auf unterschiedlichem Temperaturniveau zu betreiben sind und jeweils einen Heizungs-Vorlauf 13 und einen Heizungs-Rücklauf 14 sowie eine Zirkulationspumpe 17 umfassen. Um die Wohnungsstation 1 mit zentraler Wärmeenergie in einem Heizwasserkreislauf zu versorgen, sind ein Heizwasser-Vorlauf 15 und ein Heizwasser-Rücklauf 16 vorgesehen. Sowohl die Heizungskreisläufe als auch der Heizwasserkreislauf sind über den Wärmetauscher 8 geführt. Zwischen dem Heizwasser-Vorlauf 15 und dem Heizwasser-Rücklauf 16 sind ein Differenzdruckregler 18 und ein Wärmemengenzähler 19 vorgesehen.

Zum temperaturgeregelten Betreiben einer Fußbodenheizung ist zwischen den Heizungs-Vorlauf 13 und den Heizungs-Rücklauf 14 ein temperaturgeregeltes Dreiwege-Mischventil 27 eingesetzt.

Zur Sicherstellung einer bestimmten Zapftemperatur des Warmwassers, ist dem Wärmetauscher 8 ein Warmwasser-Temperaturfühler 21 zugeordnet, der mit der Ventileinheit 20 gekoppelt ist. An einem ersten Thermostatventil 22 der Ventileinheit 20 ist die Temperatur des Warmwasserkreislaufs, also insbesondere die Zapftemperatur, einstellbar.

Um bei der Entnahme von Warmwasser, auch in größeren Mengen, eine zuverlässige Erwärmung durch das den Wärmetauscher 8 durchströmende Heizwasser sicherzustellen, ist eine Warmwasser-Vorrangschaltung innerhalb der Wohnungsstation vorgesehen, die eine temperaturgeregelte Ventileinheit 20 mit einem Temperaturfühler 23 umfasst, der dem Wärmetauscher 8 in einem Heizungs-Rücklauf 14 des Heizungskreislaufs zur Erfassung einer vorgegebenen Temperatur, die auch als Grenztemperatur zu bezeichnen ist, zugeordnet ist.

Die Grenztemperatur wird an einem zweiten Thermostatventil 24 der Ventileinheit 20 eingestellt. Bei Erreichen der Grenztemperatur wird die Warmwasser-Vorrangschaltung derart geschaltet, dass der Heizungs-Rücklauf 14 geschlossen ist. Sonach steht das an dem Wärmetauscher 8 anliegende Heizwasser komplett zur Erwärmung des Warmwassers zur Verfügung.

Die beiden Temperaturfühler 21, 23 sind mittels Leiter 25 mit den zugeordneten Thermostatventilen 22, 24, die in einem gemeinsamen Ventilblock 26 der Ventileinheit 20 ausgebildet bzw. angeordnet sind, verbunden.

Um die gesamte Anlage zu Befüllen oder ein Spülen der Anlage oder zumindest der Wohnungsstation 1 oder des Wärmetauschers 8 mit Wasser, auch mit Wasser mit einer relativ hohen Temperatur, zu ermöglichen, weist das zweite Thermostatventil 24 der Ventileinheit 20 eine Stellung auf, in der ein Strömungskanal im Heizungs-Rücklauf 14 permanent geöffnet ist. Diese Ventilstellung wird auch als Service-Stellung oder Service-Position bezeichnet.

**Bezugszeichen**

| | | | |
|---|---|---|---|
| 1. | Wohnungsstation | 15. | Heizwasser-Vorlauf |
| 2. | Montagerahmen | 16. | Heizwasser-Rücklauf |
| 3. | Montageplatte | 17. | Zirkulationspumpe |
| 4. | Absperrventil | 18. | Differenzdruckregler |
| 5. | Rohrleitung | 19. | Wärmemengenzähler |
| 6. | Warmwasser-Vorlauf | 20. | Ventileinheit |
| 7. | Warmwasser-Rücklauf | 21. | Temperaturfühler |
| 8. | Wärmetauscher | 22. | erstes Thermostatventil |
| 9. | Kaltwasser-Zulauf | 23. | Warmwasser-Temperaturfühler |
| 10. | Kaltwasser-Auslauf | | |
| 11. | Wasserschlagdämpfer | 24. | zweites Thermostatventil |
| 12. | Umwälzpumpe | 25. | Leiter |
| 13. | Heizungs-Vorlauf | 26. | Ventilblock |
| 14. | Heizungs-Rücklauf | 27. | Dreiwege-Mischventil |

## Patentansprüche

1. Verfahren zum Betreiben einer Wohnungsstation (1) mit Anschlüssen für Warmwasser, mindestens einen Heizungskreislauf und einen Heizwasserkreislauf, der mit einer zentralen Wärmeerzeugungseinrichtung gekoppelt ist, wobei das Heizwasser zur Erzeugung von Warmwasser einen Wärmetauscher (8) durchströmt und eine Warmwasser-Vorrangschaltung bei einer Entnahme von Warmwasser mittels einer Ventileinheit (20) den Heizungskreislauf schaltet, **wobei** an dem Wärmetauscher (8) eine Rücklauf-Temperatur in einem Heizungs-Rücklauf (14) erfasst und beim Erreichen einer vorgegebenen Rücklauf-Temperatur an der Ventileinheit (20) der Heizungs-Rücklauf (14) des Heizungskreislaufs geschlossen wird, **dadurch gekennzeichnet, dass** die Rücklauf-Temperatur des Heizungskreislaufs zur Regelung der Ventileinheit (20) erfasst und eine das Öffnen oder Schließen des Heizungs-Rücklaufs (14) an der Ventileinheit (20) bewirkende Rücklauf-Temperatur an der Ventileinheit (20) eingestellt wird.

2. Verfahren nach Anspruch 1, **dadurch gekennzeichnet, dass** die Zapftemperatur des Warmwassers als Temperatur in dem Wärmetauscher (8) zur Regelung der Ventileinheit (20) erfasst wird.

3. Wohnungsstation mit Anschlüssen für Warmwasser, einen Heizungskreislauf und einen Heizwasserkreislauf, der mit einer zentralen Wärmeerzeugungseinrichtung koppelbar ist, wobei Heizwasser zur Erzeugung von Warmwasser einen Wärmetauscher (8) durchströmt, mit einer Ventileinheit (20), mit einem Temperaturfühler (23), und mit einer Warmwasser-Vorrangschaltung, die bei einer Entnahme von Warmwasser mittels der Ventileinheit (20) einen Heizungskreislauf schaltet, wobei dem Wärmetauscher (8) der Temperaturfühler (23) zugeordnet ist, der mit der Ventileinheit (20) derart gekoppelt ist, dass bei einer von dem Temperaturfühler (23) erfassten vorgegebenen Temperatur die Ventileinheit (20) den Heizungs-Rücklauf (14) des Heizungskreislaufs schließt, **dadurch gekennzeichnet, dass** der Temperaturfühler (23) dem Heizungs-Rücklauf (14) des Heizungskreislaufs zugeordnet ist.

4. Wohnungsstation nach Anspruch 3, **dadurch gekennzeichnet, dass** dem Wärmetauscher (8) ein Warmwasser-Temperaturfühler (21) zugeordnet ist, der mit der Ventileinheit (20) gekoppelt ist.

5. Wohnungsstation nach Anspruch 3 oder 4, **dadurch gekennzeichnet, dass** der Temperaturfühler (23) und/oder der Warmwasser-Temperaturfühler (23) über eine Drahtlosschnittstelle oder einen Leiter (25) mit der Ventileinheit (20) gekoppelt sind.

6. Wohnungsstation nach einem der Ansprüche 3 bis 5, **dadurch gekennzeichnet, dass** die Ventileinheit (20) ein erstes Thermostatventil (22) umfasst, an dem eine Temperatur des Warmwasserkreislaufs einstellbar ist, und ein zweites Thermostatventil (24) umfasst, an dem die Temperatur in dem Heizungs-Rücklauf (14) als eine Grenztemperatur für die Warmwasser-Vorrangschaltung einstellbar ist.

7. Wohnungsstation nach einem der Ansprüche 3 bis 6, **dadurch gekennzeichnet, dass** das Thermostatventil (22) und das Thermostatventil (24) in einem gemeinsamen Ventilblock (26) der Ventileinheit (20) angeordnet sind.

8. Wohnungsstation nach Anspruch 6, **dadurch gekennzeichnet, dass** das zweite Thermostatventil (24) der Ventileinheit (20) eine Stellung aufweist, in der ein Strömungskanal im Heizungs-Rücklauf (14) permanent geöffnet ist.

## Claims

1. Method for operating a home station (1) comprising connections for hot water, at least one heating circuit and a heating water circuit which is coupled to a central heat generation device, the heating water flowing through a heat exchanger (8) in order to generate hot water and a hot water priority circuit switching the heating circuit when hot water is drawn by means of a valve unit (20),a return temperature in a heating return (14) being recorded at the heat exchanger (8) and, when a predetermined return temperature is reached at the valve unit (20), the heating return (14) of the heating circuit being closed, **characterized in that** the return temperature of the heating circuit is recorded for controlling the valve unit (20), and a return temperature causing the opening or closing of the heating return (14) at the valve unit (20) is set at the valve unit (20).

2. Method according to claim 1, **characterized in that** the tapping temperature of the hot water is recorded as the temperature in the heat exchanger (8) for controlling the valve unit (20).

3. Home station comprising connections for hot water, a heating circuit and a heating water circuit which can be coupled to a central heat generation device, heating water flowing through a heat exchanger (8) in order to generate hot water, and comprising a valve unit (20), a temperature sensor (23), and a hot water priority circuit which switches a heating circuit when hot water is drawn by means of the valve unit (20), the temperature sensor (23) being assigned to the heat exchanger (8), which temperature sensor is coupled to the valve unit (20) such that at a predetermined temperature recorded by the temperature sensor (23), the valve unit (20) closes the heating return (14) of the heating circuit, **characterized in that** the temperature sensor (23) is assigned to the heating return (14) of the heating circuit.

4. Home station according to claim 3, **characterized in that** a hot water temperature sensor (21) is assigned to the heat exchanger (8), which hot water temperature sensor is coupled to the valve unit (20).

5. Home station according to either claim 3 or claim 4, **characterized in that** the temperature sensor (23) and/or the hot water temperature sensor (23) are coupled to the valve unit (20) via a wireless interface or a conductor (25).

6. Home station according to any of claims 3 to 5, **characterized in that** the valve unit (20) comprises a first thermostat valve (22) at which a temperature of the hot water circuit can be set, and a second thermostat valve (24) at which the temperature in the heating return (14) can be set as a limit temperature for the hot water priority circuit.

7. Home station according to any of claims 3 to 6, **characterized in that** the thermostat valve (22) and the thermostat valve (24) are arranged in a common valve block (26) of the valve unit (20).

8. Home station according to claim 6, **characterized in that** the second thermostat valve (24) of the valve unit (20) has a position in which a flow channel in the heating return (14) is permanently open.

## Revendications

1. Procédé permettant de faire fonctionner une station domestique (1) comportant des raccords pour eau chaude, au moins un circuit de chauffage et un circuit d'eau de chauffage qui est raccordé à un dispositif de production de chaleur central, dans lequel l'eau de chauffage circule à travers un échangeur de chaleur (8) pour la production d'eau chaude et une commutation prioritaire d'eau chaude commute le circuit de chauffage lors d'un prélèvement d'eau chaude au moyen d'une unité formant soupape (20), **dans lequel** une température de reflux est détectée dans un reflux de chauffage (14) au niveau de l'échangeur de chaleur (8) et le reflux de chauffage (14) du circuit de chauffage est fermé lorsqu'une température de reflux prédéfinie est atteinte au niveau de l'unité formant soupape (20),
**caractérisé en ce que** la température de reflux du circuit de chauffage est détectée pour la régulation de l'unité formant soupape (20) et une température de reflux provoquant l'ouverture ou la fermeture du reflux de chauffage (14) au niveau de l'unité formant soupape (20) est réglée au niveau de l'unité formant soupape (20).

2. Procédé selon la revendication 1, **caractérisé en ce que** la température de distribution de l'eau chaude est détectée en tant que température dans l'échangeur de chaleur (8) pour la régulation de l'unité formant soupape (20).

3. Station domestique comportant des raccords pour eau chaude, un circuit de chauffage et un circuit d'eau de chauffage qui peut être raccordé à un dispositif de production de chaleur central, dans laquelle l'eau de chauffage circule à travers un échangeur de chaleur (8) pour la production d'eau chaude, comportant une unité formant soupape (20), comportant une sonde de température (23), et comportant une commutation prioritaire d'eau chaude qui, lors d'un prélèvement d'eau chaude, commute un circuit de chauffage au moyen de l'unité formant soupape (20), dans laquelle la sonde de température (23) est associée à l'échangeur de chaleur (8) et est connectée à l'unité formant soupape (20) de telle sorte que, lors d'une détection de température prédéfinie par la sonde de température (23), l'unité formant soupape (20) ferme le reflux de chauffage (14) du circuit de chauffage, **caractérisée en ce que** la sonde de température (23) est associée au reflux de chauffage (14) du circuit de chauffage.

4. Station domestique selon la revendication 3, **caractérisée en ce qu'**une sonde de température d'eau chaude (21) est associée à l'échangeur de chaleur (8) et est connectée à l'unité formant soupape (20).

5. Station domestique selon la revendication 3 ou 4,
**caractérisée en ce que** la sonde de température (23) et/ou la sonde de température d'eau chaude (23) sont connectées à l'unité formant soupape (20) par l'intermédiaire d'une interface sans fil ou d'un conducteur (25).

6. Station domestique selon l'une des revendications 3 à 5,
**caractérisée en ce que** l'unité formant soupape (20) comprend une première soupape thermostatique (22) sur laquelle une température du circuit d'eau chaude peut être réglée, et comprend une seconde soupape thermostatique (24) sur laquelle la température dans le reflux de chauffage (14) peut être réglée en tant que température limite pour la commutation prioritaire d'eau chaude.

7. Station domestique selon l'une des revendications 3 à 6,
**caractérisée en ce que** la soupape thermostatique (22) et la soupape thermostatique (24) sont disposées dans un bloc de soupape (26) commun de l'unité formant soupape (20).

8. Station domestique selon la revendication 6, **caractérisée en ce que** la seconde soupape thermostatique (24) de l'unité formant soupape (20) présente une position dans laquelle un canal d'écoulement est ouvert en permanence dans le reflux de chauffage (14).
